# EUROPEAN PATENT SPECIFICATION

(11) **EP 1 456 824 B1**
(45) Date of publication and mention of the grant of the patent: **05.12.2012**
(21) Application number: 02784242.6
(22) Date of filing: 23.10.2002
(51) Int. Cl.: G08B 15/00, H04N 7/18

(54) **AIRCRAFT SECURITY CAMERA SYSTEM**
KAMERAÜBERWACHUNGSSYSTEM FÜR FLUGZEUGE
SYSTEME DE CAMERA DE SECURITE POUR AERONEF

(30) Priority: 21.12.2001 US 32345
(43) Date of publication of application: 15.09.2004
(73) Proprietor: The Boeing Company, Chicago, IL 60606-2016 (US)
(72) Inventor: POBLETE, Daniel, D., Lake Forest, CA 92630 (US)
(74) Representative: Land, Addick Adrianus Gosling
(86) International application number: PCT/US2002/033974
(87) International publication number: WO 2003/058571

(56) References cited:
- WO-A-01/03437
- US-A- 5 742 336
- US-B1- 6 366 311

## Description

The present invention relates to aircraft security systems.

More specifically, the present invention relates to a surveillance system capable of monitoring aircraft passengers and crew members.

In order to monitor and record the events onboard an aircraft, aircraft are increasingly being outfitted with surveillance systems. Aircraft surveillance systems have traditionally been confined to flight deck audio recorders. However, due to the increasing number of onboard disturbances and flight deck intrusions, a need has arisen to develop enhanced electronic video surveillance systems which monitor not only the flight deck but also the passenger cabin.

Currently, there are several video surveillance devices which may be used to adequately record the events occurring on an aircraft flight deck or within an aircraft passenger compartment. However, such devices simply store the recorded events using an electronic storage device for later retrieval. Present day surveillance devices do not have the capability of transmitting the onboard events in real-time to outside authorities, thus depriving the authorities of the opportunity to provide a response in an attempt to rectify any technical difficulties or thwart any unlawful events which may be taking place onboard. Further, the information stored by such devices is subject to being destroyed as the result of an aircraft crash or due to intentional destruction by an onboard person acting in an unlawful manner.

Consequently, there is a need for an aircraft surveillance system that is able to monitor the events of an aircraft flight deck and passenger compartment and relay real time images of the events to a remote party, to allow the remote party to control movement of the cameras, and to permit the storage of the camera images by the remote party.

US-A-5 742 336 discloses a surveillance system adapted for use on a mobile platform and adapted for communicating real time video of a desired portion of said mobile platform to a remotely located monitoring base station, comprising: at least one video camera positioned on said mobile platform to view a desired area of said mobile platform and for generating output signals representing a video image of said desired area.

The present invention provides a surveillance system adapted for use on a mobile platform and adapted for communicating real time video of a desired portion of said mobile platform to a remotely located monitoring base station, comprising: at least one video camera positioned on said mobile platform to view a desired area of said mobile platform and for generating output signals representing a video image of said desired area; characterized by
a radio frequency communications subsystem carried onboard said mobile platform for communicating said output signals to outside authorities at said remotely located monitoring system; and
a recorder subsystem located on board the mobile platform for recording said output signals for viewing later in time, wherein said base station transmits radio frequency signals representing control commands to said video camera to control operation thereof.

Advantageously, the surveillance system would be comprised of a plurality of video cameras which may not only be individually rotated but also outfitted with a zoom lens feature allowing a particular point of interest to be viewed in detail. The cameras may be of numerous shapes and sizes but the customer should have the option of purchasing cameras which are of a size which would permit concealment of the cameras within a ceiling panel or interior bulkhead. Further, the cameras should preferably be light in weight so as to not add to the operating costs of the aircraft and be low light, high resolution, color cameras that will produce an image that meets or exceeds the image quality standards set by the National Television Standards Committee.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a simplified block diagram of a preferred embodiment of the surveillance system of the present invention, the diagram illustrating the transfer of video images in the form of electronic signals from a security camera to a remote user and the control of the cameras by the remote user;

Figure 2 is a schematic illustration of an aircraft fuselage outfitted with the surveillance system of the present invention;

Figure 3 is a an enlarged view of the aircraft flight deck of Figure 2;

Figure 4 is an enlarged view of an aircraft bulkhead of Figure 2 illustrating a video camera of the surveillance system in a concealed position; and

Figure 5 is an enlarged view of two of the aircraft bulkheads of Figure 2 illustrating video cameras of the surveillance system in exposed positions.

### DETAILED DESCRIPTION OF THE PREFERRED EMBODIMENTS

The following description of the preferred embodiment(s) is merely exemplary in nature and is in no way intended to limit the invention, its application, or uses.

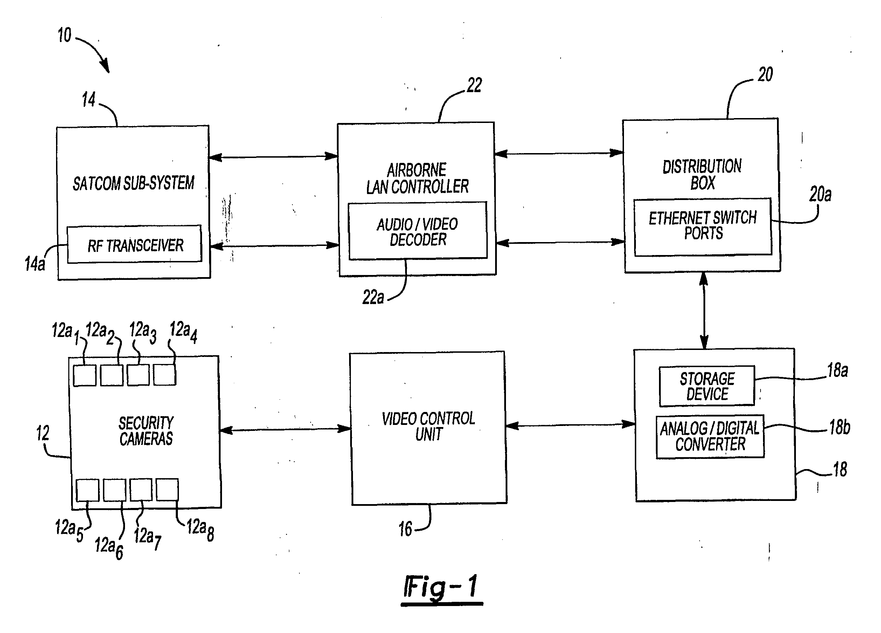

With initial reference to Figure 1, a system 10 adapted for use with a mobile platform is shown. The system 10 allows for the transfer of data from a security camera system 12 to a remote party through the use of a satellite communications (SATCOM) system. The SATCOM system consists of a SATCOM subsystem 14 which communicates radio frequency signals to satellite based transponders, the transponders further communicating the radio frequency signals to ground based radio frequency receivers/transmitters. While the system 10 as illustrated focuses on the use of a video monitoring device, the invention may also be outfitted to include an audio monitoring device as well.

The camera system 12 includes a plurality of independent cameras 12a₁ - 12a₈. The cameras 12a produce electronic signals representing the video images captured by the camera system 12. In practice, it is anticipated that the use of a plurality of cameras 12a will be most preferred, particularly within mobile platforms such as commercial aircraft so as to allow an entire cabin area and/or flight deck to be viewed substantially simultaneously. The camera system 12 is also in receipt of electronic signals from the remote party, the signals representing camera operating commands. The commands will vary depending on the capabilities of the cameras 12a, but may include instructions for the cameras 12a to rotate, pan, or zoom so as to allow the user to view a particular area of interest.

The type and quality of the cameras 12a used may vary according to user preference. However, the cameras 12a are preferably low light, high resolution, color cameras that produce images that meet or exceed the standards set by the National Television Standards Committee (NTSC). Optionally, the cameras 12a may be infrared cameras that are able to record images when little or no light is present to illuminate the viewing area. The cameras 12a may optionally be rotatable cameras equipped with a zoom feature and may be of a small size, such as a pinhole camera, so that they may be concealed within a ceiling panel or interior bulkhead. A variety of suitable surveillance cameras are produced in the marketplace. Two examples of suitable cameras are the CMF-01 and the CMC-01 manufactured by Securaplane Technologies. The CMC-01 is particularly well suited to covert monitoring as it is a pinhole camera.

The system 10 further includes a video control unit 16. The video control unit 16 supplies the electricity to operate the cameras 12a. The video control unit 16 also serves as a junction box connecting the feeds of the multiple cameras 12a. The video control unit 16 is also used to connect the feeds of the cameras 12a to an onboard computer server 18. Further, the video control unit 16 acts as a surge protector in that it cuts off power to the cameras 12a when a sudden spike in electrical current is experienced.

Electronic signals are transmitted between the video control unit 16 and the security cameras 12a through a suitable cable assembly such as one or more coaxial cables. The transmission is a two-way transmission as the cameras 12a are capable of transmitting the video data collected while also being capable of receiving commands from a remote user. The electric current used to power the cameras 12a is transmitted to the cameras 12a using a suitable cable assembly such as a 28v twisted pair wire.

The system 10 further comprises a server 18. The server 18 is comprised of a storage device 18a and an analog/digital converter 18b. The security camera video transmissions are in the form of analog signals. Thus, for the signals to be electronically stored and transmitted through the satellite communications (SATCOM) subsystem 14 they must be converted to digital signals using the analog/digital converter 18b. Likewise, when digital commands are transmitted to the cameras 12a through the SATCOM subsystem 14 they must be converted to analog signals in order to be transmitted to the cameras 12a. The video transmissions are stored on the server 18 using storage device 18a, which may comprise a computer hard disk drive or a tape drive. The signals from the security cameras 12a are transmitted to the server 18 by way of a suitable cable assembly such as a coaxial cable. In a similar fashion, the control signals from the remote user are transmitted to the camera system 12 by one or more suitable cables such as coaxial cables.

The system 10 further includes a distribution box 20. The distribution box 20 contains an Ethernet switch 20a which may be equipped with any number of ports, but in one preferred embodiment with eleven ports. The switch 20a provides an interface between the surveillance cameras 12a and a local area network (LAN) 22 of the SATCOM subsystem 14. The digital video signal stored on the server 18 is transferred from the server 18 to one of the ports of the Ethernet switch 20a by way of a suitable cable assembly such as an RJ45 cable assembly. Likewise, camera commands given by the remote user are transferred from the distribution box 20 to the server 18 using a suitable cable assembly such as an RJ45 cable assembly.

The system 10 further comprises an airborne LAN 22. The airborne LAN 22 distributes signals received by the aircraft's SATCOM subsystem 14 and receives signals from the airborne distribution box 20 to be transmitted by the SATCOM subsystem 14. The digital video signals fed through the distribution box 20 are transmitted to the airborne LAN 22 using a suitable cable assembly and are transferred at preferably either 100 or 10 megabytes per second. Likewise, the camera control signals sent from the remote user which are transferred through the airborne LAN 22 are transferred to the distribution box 20 through a suitable cable assembly and are transferred at preferably either 100 or 10 megabytes per second.

Airborne LAN 22 also contains an audio/video decoder 22a. The decoder 22a is used to convert the digital video signals emitted from the video cameras 12a to a format suitable for transmission by the SATCOM subsystem 14. In a similar manner, the audio/video decoder 22a decodes camera control signals sent by the remote user so as to put the signals in a suitable format to be transferred through the airborne LAN 22 and subsequently to the security cameras 12a themselves. It will be appreciated that if no audio monitoring of the interior of the aircraft is desired, then the audio decoding capability is not needed.

The SATCOM subsystem 14 includes an onboard RF transceiver 14a which sends and receives signals from the airborne LAN 22 at a rate of preferably either 100 or 10 megabytes per second using a suitable cable assembly. The RF transceiver 14a communicates signals to an orbiting satellite and the satellite communicates signals to a remotely located SATCOM station, such as for example a SATCOM ground station. The remotely located SATCOM station then communicates the signals to a suitable network operations center where signals may be received and transmitted by a user in communication with the network operations center through a suitable communications medium such as the Internet. The images may be stored by either the remotely located SATCOM station, the network operations center, or another remote user using a suitable electronic storage device.

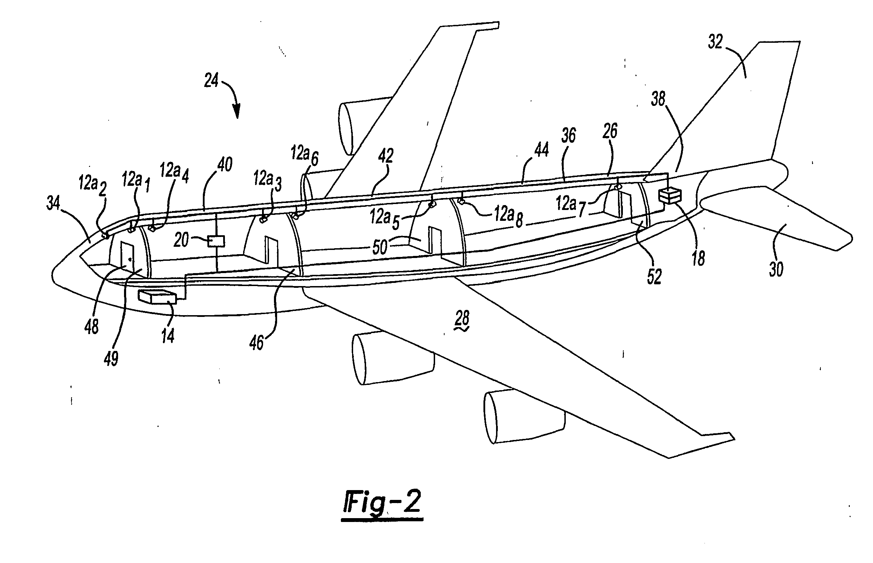

Figure 2 shows the aircraft security system 10 described above installed in an aircraft generally illustrated at 24. It will be appreciated, however, that the system 10 is equally well adopted for use on a variety of other forms of mobile platforms such as land vehicles and ships. The aircraft 24 is comprised of a fuselage 26, a pair of wings 28, a pair of horizontal stabilizers 30, and a vertical stabilizer 32. The fuselage 26 contains a flight deck 34, a passenger cabin compartment 36, and a tail section 38. The passenger cabin compartment 36 may be divided into several subcompartments such as a first class cabin 40, a business class cabin 42, and an economy class cabin 44.

The aircraft 24 may be outfitted with one or a plurality of the security cameras 12a positioned in a wide variety of placements. The number and placement of the security cameras 12a will depend on particular user preference and need. However, in one preferred embodiment of the invention, the aircraft 24 has two cameras 12a in the flight deck 34, two cameras 12a in the first class cabin 40, two cameras 12a in the business class cabin 42, and two cameras 12a in the economy class cabin 44. This arrangement of cameras 12a allows for coverage of virtually the entire flight deck 34 and the entire passenger cabin 36 within the aircraft 24.

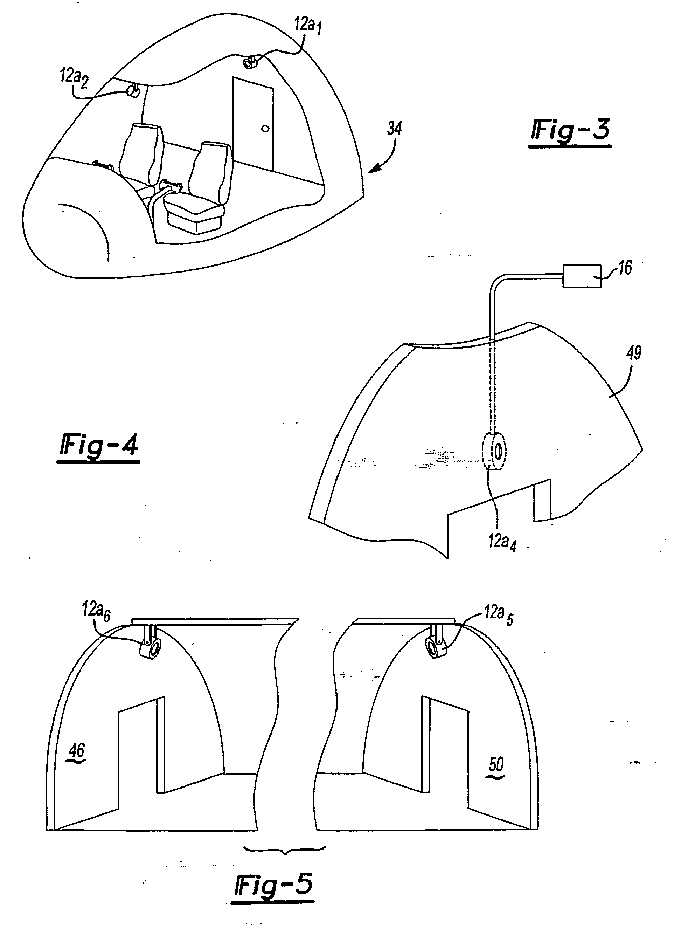

In the preferred embodiment of Applicant's invention the flight deck 34 has a forward facing camera 12a₁ and an aft facing camera 12a₂ as illustrated in Figure 3. The forward facing camera 12a₁ provides video monitoring of the pilots and the aircraft displays. The camera 12a₁ may be mounted in either a ceiling of the flight deck 34 or in a wall of the flight deck 34. Further, the camera 12a₁ may be mounted in either a concealed or exposed manner. The aft facing camera 12a₂ will provide video monitoring of the pilots and other crew members in the flight deck 34. The camera 12a₂ may be mounted in the ceiling of the flight deck 34 or in a wall of the flight deck 34. The camera 12a₂ may also be mounted in either a concealed or exposed manner.

The first class cabin 40 will have an aft mounted camera 12a₃. Aft mounted camera 12a₃ is preferably mounted to a bulkhead 46 or in the aft ceiling of cabin 42. The camera 12a₃ may be mounted in either an exposed or concealed manner. The aft mounted camera 12a₃ faces the front of the aircraft 24 so as to monitor the security of a flight deck entrance door 48. The first class cabin 40 also has a forward mounted camera 12a₄. Figure 4 illustrates forward mounted camera 12a₄ mounted to a bulkhead 49 in a concealed manner. However, camera 12a₄ may also be mounted to bulkhead 49 in an exposed manner as well as mounted to the ceiling of cabin 40 in a concealed or exposed manner. Regardless of the placement of the camera 12a₄ or the manner in which it is secured, the camera 12a₄ is preferably positioned so as to monitor a person approaching the flight deck door 48.

The business class cabin 42 has an aft mounted camera 12a₅. Figure 5 illustrates aft mounted camera 12a₅ mounted to an aft ceiling of cabin 42 in an exposed manner. However, camera 12a₅ may also be concealed within the aft ceiling of cabin 42, as well as mounted to a bulkhead 50 in either a concealed or exposed manner. The aft mounted camera 12a₅ is positioned to monitor the activity of the business class cabin 42 from an aft view. The business class cabin 42 also has a forward mounted camera 12a₆. Figure 5 illustrates the camera 12a₆ mounted to a forward ceiling of cabin 42 in an exposed manner. However, camera 12a₆ may also be concealed within the forward ceiling, as well as mounted to bulkhead 46 in either a concealed or exposed manner. The camera 12a₆ is positioned so as to monitor the activity of the business class cabin 44 from a forward view.

The economy class cabin 44 has an aft mounted camera 12a₇. The aft mounted camera 12a₇ is preferably mounted to a bulkhead 52 or to the aft ceiling of the cabin 44. The aft mounted camera 12a₇, like the cameras 12a described previously, may be mounted in either an exposed or concealed position. The aft mounted camera 12a₇ is positioned to monitor the activity of the economy class cabin 44 from an aft view. The economy class cabin 44 has a forward mounted camera 12a₈. The camera 12a₈ is mounted at a forward end of cabin 44, such as in bulkhead 50 or the forward ceiling of the cabin 44, and is positioned so as to monitor the activity of the economy class cabin 44 from a forward view. The camera 12a₈ may be mounted in a concealed or exposed position.

The above described security cameras 12a are interconnected using a plurality of suitable cable assemblies such as coaxial cable assemblies. The cameras 12a are connected to the video control unit (VCU) 16 as described herein.

Thus, an airborne video surveillance system 10 is provided. The surveillance system 10 allows the images obtained by onboard video cameras to be transmitted by way of a satellite communications network to a remote user so that the user may view the camera images in real time. Further, the surveillance system 10 allows the remote user to actively control the zoom and directional orientation of the cameras so that the viewer can focus his/her attention on a particular area. Consequently, the events onboard the aircraft may be actively monitored so as to provide remote authorities with the opportunity to prepare an appropriate response to an emergency situation.

The description of the invention is merely exemplary in nature and, thus, variations that do not depart from the invention are intended to be within the scope of the invention. Such variations are not to be regarded as a departure from the scope of the invention.

## Claims

1. A surveillance system (10) adapted for use on a mobile platform and adapted for communicating real time video of a desired portion of said mobile platform to a remotely located monitoring base station, comprising:
at least one video camera (12a₁) positioned on said mobile platform to view a desired area of said mobile platform and for generating output signals representing a video image of said desired area; **characterized by**
a radio frequency communications subsystem carried onboard said mobile platform for communicating said output signals to outside authorities at said remotely located monitoring system; and
a recorder subsystem (18a) located on board the mobile platform for recording said output signals for viewing later in time,
wherein said base station transmits radio frequency signals representing control commands to said video camera to control operation thereof.

2. The surveillance system of Claim 1, wherein a plurality of video cameras are included for monitoring a plurality of areas within said mobile platform.

3. The surveillance system of Claim 1 or 2, further comprising a distribution subsystem (20) for transmitting said output signals from said video camera to said radio frequency communications subsystem.

4. The surveillance system of Claim 1, 2 or 3 wherein said radio frequency communications subsystem operates to receive the camera control commands from said remotely located monitoring station; and wherein said system further comprises a video control unit for receiving said camera control commands and using said camera control commands to control operation of said video camera.

5. The surveillance system of any of Claims 3-4, wherein said system comprises a video control unit which acts as an interface between a plurality of said cameras.

6. The surveillance system of any of Claims 3-5, wherein said system comprises a video control unit (16) which provides said video cameras with electrical current and electrical current surge protection.

7. The surveillance system of any of Claims 3-6, wherein said system comprises a computer server (18) capable of storing said signals from said video camera using a suitable electronic storage device.

8. The surveillance system of any of Claims 3-7, wherein said video camera comprises a color camera capable of producing an image which meets or exceeds the standards set by the National Television Standards Committee.

9. The surveillance system of any of Claims 3-8, wherein said control commands transmitted to said video camera instruct said camera to perform at least one of the functions: pan, rotate, and zoom.

10. The surveillance system of any of Claims 3-9, wherein said video images are stored in a recorder subsystem responsive to said output signals.

11. A method for transmitting a radio frequency signal representing video images of a predetermined area of a mobile platform such as an aircraft, the method comprising: using at least one video camera positioned to view said predetermined area; using a radio frequency communications system responsive to output signals from said video camera to generate radio frequency signals representing video images viewed by said video camera; recording on a recorder subsystem located on board of the mobile platform sais output signals for viewing later in time; and using a base station for receiving said radio frequency signals from said radio frequency subsystem and for transmitting radio frequency signals representing control commands to said video camera to control operation of said video camera, said base station being remotely located with outside authorities to control operation of said video camera.

12. The method of claim 11, wherein the system of any of claims 1-10 is used.

## Patentansprüche

1. Überwachungssystem (10), angepasst zwecks Verwendung auf einer mobilen Plattform und angepasst zwecks Übermittlung von Echtzeitvideo von einem gewünschten Abschnitt der mobilen Plattform zu einer entfernt gelegenen Überwachungsbasisstation, umfassend:
zumindest eine Videokamera (12a₁), die auf der mobilen Plattform so positioniert ist, dass sie einen gewünschten Bereich der mobilen Plattform sieht, und zum Erzeugen von Ausgangssignalen, die ein Videobild des gewünschten Bereichs darstellen; **gekennzeichnet durch**
ein an Bord der mobilen Plattform mitgeführtes Funkfrequenzkommunikationssubsystem zum Übermitteln der Ausgangssignale an externe Instanzen am entfernt gelegenen Überwachungssystem; und
ein an Bord der mobilen Plattform befindliches Rekordersubsystem (18a) zum Aufzeichnen der Ausgangssignale zwecks Ansehens zu einem späteren Zeitpunkt,
wobei die Basisstation Funkfrequenzsignale, die Steuerbefehle darstellen, an die Videokamera sendet, um deren Betrieb zu steuern.

2. Überwachungssystem nach Anspruch 1, wobei eine Mehrzahl von Videokameras zwecks Überwachung einer Mehrzahl von Bereichen innerhalb der mobilen Plattform einbezogen ist.

3. Überwachungssystem nach Anspruch 1 oder 2, das weiterhin ein Verteilungssubsystem (20) zum Senden der Ausgangssignale aus der Videokamera zum Funkfrequenzkommunikationssubsystem umfasst.

4. Überwachungssystem nach Anspruch 1, 2 oder 3, wobei das Funkfrequenzkommunikationssubsystem so funktioniert, dass es die Kamerasteuerbefehle aus der entfernt gelegenen Überwachungsstation empfängt; und wobei das System weiterhin eine Videosteuereinheit umfasst zwecks Empfangs der Kamerasteuerbefehle und Verwendung der Kamerasteuerbefehle, um den Betrieb der Videokamera zu steuern.

5. Überwachungssystem nach einem der Ansprüche 3 - 4, wobei das System eine Videosteuereinheit umfasst, die als Schnittstelle zwischen einer Mehrzahl der Kameras fungiert.

6. Überwachungssystem nach einem der Ansprüche 3 - 5, wobei das System eine Videosteuereinheit (16) umfasst, die den Videokameras elektrischen Strom und Stromspitzenüberlastschutz liefert.

7. Überwachungssystem nach einem der Ansprüche 3 - 6, wobei das System einen Computerserver (18) umfasst, der in der Lage ist, die Signale aus der Videokamera unter Verwendung einer geeigneten elektronischen Speichereinrichtung zu speichern.

8. Überwachungssystem nach einem der Ansprüche 3 - 7, wobei die Videokamera eine Farbkamera umfasst, die in der Lage ist, ein Bild hervorzubringen, das die vom National Television Standards Committee gesetzten Standards erfüllt oder übertrifft.

9. Überwachungssystem nach einem der Ansprüche 3 - 8, wobei die zur Videokamera gesendeten Steuerbefehle die Kamera anweisen zur Ausführung zumindest einer der Funktionen: Schwenken, Drehen und Zoomen.

10. Überwachungssystem nach einem der Ansprüche 3 - 9, wobei die Videobilder in einem Rekordersubsystem gespeichert werden, das auf die Ausgangssignale anspricht.

11. Verfahren zum Senden eines Funkfrequenzsignals, das Videobilder von einem vorgegebenen Bereich einer mobilen Plattform wie eines Luftfahrzeugs darstellt, wobei das Verfahren umfasst: Verwenden zumindest einer Videokamera, die so positioniert ist, dass sie den vorgegebenen Bereich sieht; Verwenden eines auf Ausgangssignale aus der Videokamera ansprechenden Funkfrequenzkommunikationssystems, um Funkfrequenzsignale zu erzeugen, die von der Videokamera gesehene Videobilder darstellen; Aufzeichnen auf einem Rekordersubsystem, das sich an Bord der mobilen Plattform befindet, der Ausgangssignale zwecks Ansehens zu einem späteren Zeitpunkt; und Verwenden einer Basisstation zum Empfangen der Funkfrequenzsignale aus dem Funkfrequenzsubsystem und zum Senden von Funkfrequenzsignalen, die Steuerbefehle darstellen, an die Videokamera, um den Betrieb der Videokamera zu steuern, wobei die Basisstation entfernt liegt mit externen Instanzen, um den Betrieb der Videokamera zu steuern.

12. Verfahren nach Anspruch 11, wobei das System nach einem der Ansprüche 1 - 10 verwendet wird.

## Revendications

1. Système de surveillance (10) adapté pour une utilisation sur une plateforme mobile et adapté pour communiquer une vidéo en temps réel d'une partie souhaitée de ladite plateforme mobile à une station de contrôle installée à distance, comprenant:
au moins une caméra vidéo (12a₁) mise en place sur ladite plateforme mobile de manière à visualiser une zone souhaitée de ladite plateforme mobile et destinée à générer des signaux d'émission représentant une image vidéo de la zone souhaitée; **caractérisé par**
un sous-système de télécommunication radiofréquence installé à bord de ladite plateforme mobile pour communiquer lesdits signaux d'émission à des autorités extérieures au niveau dudit système de contrôle installé à distance; et
un sous-système d'enregistrement (18a) situé à bord de la plateforme mobile pour enregistrer lesdits signaux d'émission qui pourront être visionnés ultérieurement,
dans lequel ladite station de base transmet des signaux à radiofréquence représentant des commandes de régulation à ladite caméra vidéo pour en réguler le fonctionnement.

2. Système de surveillance selon la revendication 1, dans lequel une pluralité de caméras vidéo sont mises en oeuvre pour contrôler une pluralité de zones au sein de ladite plateforme mobile.

3. Système de surveillance selon la revendication 1 ou 2, comprenant en outre un sous-système de distribution (20) destiné à transmettre lesdits signaux d'émission de ladite caméra vidéo audit sous-système de télécommunication radiofréquence.

4. Système de surveillance selon la revendication 1, 2 ou 3 dans lequel ledit sous-système de télécommunication radiofréquence fonctionne pour recevoir des commandes de régulation de caméra de la part de ladite station de contrôle installée à distance; et dans lequel ledit système comprend en outre une unité de régulation vidéo destinée à recevoir lesdites commandes de régulation de caméra et à utiliser lesdites commandes de régulation de camera pour réguler le fonctionnement de ladite caméra vidéo.

5. Système de surveillance selon l'une quelconque des revendications 3 à 4, dans lequel ledit système comprend une unité de régulation vidéo servant d'interface entre une pluralité desdites caméras.

6. Système de surveillance selon l'une quelconque des revendications 3 à 5, dans lequel ledit système comprend une unité de régulation vidéo (16) qui fournit auxdites caméras vidéo un courant électrique et une protection contre les pointes de courant.

7. Système de surveillance selon l'une quelconque des revendications 3 à 6, dans lequel ledit système comprend un serveur informatique (18) capable de stocker lesdits signaux en provenance de ladite caméra vidéo au moyen d'un dispositif de stockage électronique approprié.

8. Système de surveillance selon l'une quelconque des revendications 3 à 7, dans lequel ladite caméra vidéo comprend une caméra couleur capable de produire une image répondant ou dépassant les critères établis par le NTSC (National Television Standards Committee).

9. Système de surveillance selon l'une quelconque des revendications 3 à 8, dans lequel lesdites commandes de régulation transmises à ladite caméra vidéo donnent l'instruction à ladite caméra de réaliser l'une au moins des fonctions suivantes : faire un panoramique horizontal, effectuer une rotation et effectuer un zoom.

10. Système de surveillance selon l'une quelconque des revendications 3 à 9, dans lequel lesdites images vidéo sont stockées dans un sous-système d'enregistrement réactif auxdits signaux d'émission.

11. Procédé de transmission d'un signal à radiofréquence représentant des images vidéo d'une zone prédéterminée d'une plateforme mobile, telle qu'un aéronef, le procédé comprenant:
l'utilisation d'au moins une caméra vidéo mise en place de manière à visualiser ladite zone prédéterminée;
l'utilisation d'un système de télécommunication radiofréquence réactif aux signaux d'émission provenant de ladite caméra vidéo pour générer des signaux à radiofréquence représentant des images vidéo visualisées par ladite caméra vidéo;
l'enregistrement, sur un sous-système d'enregistrement situé à bord de la plateforme mobile, desdits signaux d'émission destinés à être visionnés ultérieurement; et
l'utilisation d'une station de base pour recevoir lesdits signaux à radiofréquence en provenance dudit sous-système radiofréquence et pour transmettre les signaux à radiofréquence représentant des commandes de régulation à ladite caméra vidéo pour réguler le fonctionnement de ladite caméra vidéo, ladite station de base étant située à distance avec des autorités extérieures pour réguler le fonctionnement de ladite caméra vidéo.

12. Procédé selon la revendication 11, dans lequel est utilisé le système selon l'une quelconque des revendications 1 à 10.
